# EUROPÄISCHE PATENTSCHRIFT

(11) **EP 2 280 471 B1**
(45) Veröffentlichungstag und Bekanntmachung des Hinweises auf die Patenterteilung: **07.08.2019**
(21) Anmeldenummer: 10165926.6
(22) Anmeldetag: 15.06.2010
(51) Int. Cl.: H02K 7/09, H02K 1/27, H02K 1/14

(54) **Elektrischer Drehantrieb**
Electric rotary drive
Entraînement rotatif électrique

(30) Priorität: 30.07.2009 EP 09166844
(43) Veröffentlichungstag der Anmeldung: 02.02.2011
(73) Patentinhaber: Levitronix GmbH, 8005 Zürich (CH)
(72) Erfinder: Nussbaumer, Thomas, Dr., 8004, Zürich (CH)
(74) Vertreter: Intellectual Property Services GmbH

(56) Entgegenhaltungen:
- EP-A1- 0 819 330
- EP-A1- 0 860 046
- US-A1- 2005 035 670
- US-A1- 2005 264 121
- US-A1- 2008 024 026
- US-A1- 2008 231 989
- US-A1- 2008 238 230
- US-A1- 2009 079 284
- US-A1- 2011 025 154
- US-B1- 6 362 549

## Beschreibung

Die Erfindung betrifft einen elektrischen Drehantrieb, der als lagerloser Motor ausgestaltet ist, gemäss dem Oberbegriff des unabhängigen Patentanspruchs.

Bei einem lagerlosen Motor ist der Stator als Lager- und Antriebsstator für die magnetische Lagerung des Rotors und den Antrieb der Rotation des Rotors um die Drehachse ausgestaltet. Häufig ist dabei der Rotor scheiben- oder ringförmig ausgebildet.

Ein solcher lagerloser Motor wird beispielsweise in der EP-A-0 860 046 und auch in der EP-A-0 819 330 offenbart. Mit dem Begriff lagerloser Motor ist gemeint, dass der Rotor vollkommen magnetisch gelagert ist, wobei keine separaten Magnetlager vorgesehen sind. Der Stator ist dazu als Lager- und Antriebsstator ausgestaltet, er ist also sowohl Stator des elektrischen Antriebs als auch Stator der magnetischen Lagerung. Dazu umfasst die Wicklung des Stators eine Antriebswicklung der Polpaarzahl p sowie eine Steuerwicklung der Polpaarzahl p±1. Mit diesen beiden Wicklungen lässt sich ein magnetisches Drehfeld erzeugen, welches zum einen ein Drehmoment auf den Rotor ausübt, das dessen Rotation bewirkt, und welches zum anderen eine beliebig einstellbare Querkraft auf den Rotor ausübt, sodass dessen radiale Position aktiv steuerbar bzw. regelbar ist. Somit sind drei Freiheitsgrade des Rotors aktiv regelbar. Bezüglich dreier weiterer Freiheitsgrade, nämlich seiner axialen Auslenkung in Richtung der Drehachse und Verkippungen bezüglich der zur Drehachse A senkrechten Ebene (zwei Freiheitsgrade) ist der Rotor passiv magnetisch, das heisst nicht ansteuerbar, durch Reluktanzkräfte stabilisiert. Bezüglich weiterer Details eines solchen lagerlosen Motors sei hier auf die bereits zitierten Dokumente verwiesen.

Der lagerlose Motor kann als Innenläufer, das heisst mit innenliegendem Rotor und darum herum angeordneten Stator, oder als Aussenläufer, das heisst mit innenliegendem Stator und darum herum angeordneten Rotor ausgestaltet sein.

Bisher ist man davon ausgegangen, dass insbesondere bei scheibenförmigem bzw. ringförmigem Rotor die Eigenschaften der magnetischen Lagerung für den Innenläufer im wesentlichen gleich sind wie für den Aussenläufer, das heisst, dass Rotor und Stator vertauschbar sind, ohne dass dies wesentliche Einflüsse auf die magnetische Lagerung hat.

Es hat sich nun gezeigt, dass diese Annahme nur für die Steifigkeit bezüglich der axialen Lagerung gilt, also für das passive magnetische Axiallager, das den Rotor gegen Verschiebungen in Richtung der Drehachse stabilisiert. Bezüglich der Stabilisierung des Rotors gegen Verkippung aus der Richtung der Drehachse ist hingegen der Aussenläufer deutlich schwächer als der Innenläufer.

Für einem Vergleich betrachtet man einen Aussenläufers mit ringförmigen Rotor und einen Innenläufer mit scheibenförmigen Rotor, wobei für beide Drehantriebe der Radius des Luftspalts zwischen Rotor und Stator der gleiche ist, im konkreten Fall 55 mm, das heisst der Abstand von der Drehachse bis zum Luftspalt zwischen Stator und Rotor ist beim Aussenläufer und beim Innenläufer gleich, hier nämlich 55 mm. Es zeigt sich für mehrere Bauhöhen des Rotors, dass die axiale Steifigkeit und die Kapazität des passiven magnetischen Axiallagers bezüglich Verschiebungen in Richtung der Drehachse für den Aussenläufer und den Innenläufer praktisch identisch sind. Mit der Bauhöhe ist dabei die Erstreckung der magnetisch wirksamen Teile des Rotors in der axialen Richtung gemeint, welche durch die Drehachse festgelegt ist.

Anders sieht es für die Stabilisierung bezüglich Verkippungen des Rotors aus. Die maximale Bauhöhe des Rotors, mit der sich beim Aussenläufer gerade noch eine Verkippungsstabilisierung bewirken lässt, beträgt bei diesen Versuchen etwa 40% des Radius des Luftspalts, die optimal Bauhöhe liegt bei etwa 15% des Radius des Luftspalts. Beim Innenläufer lässt sich dagegen auch noch eine Verkippungsstabilisierung erreichen, wenn die Bauhöhe so gross ist wie der Radius des Luftspalts.

Auch das maximal erreichbare verkippungsstabilisierende Moment ist beim Aussenläufer drastisch geringer und beträgt weniger als ein Drittel des entsprechenden Moments, welches beim Innenläufer erzielbar ist.

Diese deutlich reduzierte Verkippungsstabilisierung des Aussenläufers ist in der Praxis für viele Anwendungen unzureichend.

Es ist daher eine Aufgabe der Erfindung, einen lagerlosen Aussenläufermotor vorzuschlagen, der eine bessere Stabilisierung des Rotors gegen Verkippungen bezüglich der Drehachse aufweist.

Der diese Aufgabe lösenden Gegenstand der Erfindung ist durch die Merkmale des unabhängigen Patentanspruchs gekennzeichnet.

Erfindungsgemäss wird also ein elektrischer Drehantrieb vorgeschlagen, ausgestaltet als lagerloser Aussenläufermotor, mit einem magnetisch gelagerten, im wesentlichen ringförmigen Rotor, der um einen innenliegenden Stator herum angeordnet ist, wobei zwischen dem Rotor und dem Stator ein Luftspalt vorgesehen ist, wobei der Stator als Lager- und Antriebsstator ausgestaltet ist, mit welchem die Rotation des Rotors um eine Drehachse antreibbar ist und mit welchem der Rotor magnetisch lagerbar ist, wobei der Rotor radial in der zur Drehachse senkrechten Ebene aktiv magnetisch gelagert ist und axial in Richtung der Drehachse sowie gegen Verkippungen passiv magnetisch gelagert ist. Der Stator weist zumindest in seinem Randbereich eine magnetische Höhe auf, die kleiner ist als die magnetische Rotorhöhe des Rotors in seinem radial innenliegenden Bereich.

Mit der magnetischen Höhe des Stators ist dabei die Erstreckung der magnetisch wirksamen Teile des Stators in der durch die Drehachse festgelegten axialen Richtung gemeint. Analog ist mit der magnetischen Rotorhöhe die Erstreckung der magnetisch wirksamen Teile des Rotors in der axialen Richtung gemeint.

Dadurch, dass der Stator zumindest in seinem Randbereich eine geringere magnetische Höhe aufweist als der ihm zugewandte Bereich des Rotors, lässt sich die Stabilisierung des Rotors gegenüber Verkippungen deutlich verbessern. Durch den Höhenunterschied sind beim Aussenläufer im verkippten Zustand die magnetischen Feldlinien zwischen Stator und Rotor deutlich länger als im Falle einer gleichen magnetischen Höhe von Rotor und Stator im Randbereich. Da längere Feldlinien eine höhere Energie bedeuten, ist der verkippte Zustand beim erfindungsgemässen Drehantrieb deutlich ungünstiger als bei gleicher magnetischer Höhe von Rotor und Stator. Daraus resultiert eine erhöhte Stabilisierung gegen Verkippungen.

Folglich können auch für grosse Rotorhöhen beim Aussenläufer gute Stabilisierungen gegen Verkippungen erzielt werden. Das maximale verkippungsstabilisierende Moment ist beim erfindungsgemässen Aussenläufer deutlich höher und kann so gross werden wie bei einem Innenläufer mit gleichem Radius des Luftspalts.

Eine besonders gute Stabilisierung gegen Verkippungen lässt sich erzielen, wenn die minimale magnetische Rotorhöhe höchstens so gross ist wie der halbe Aussendurchmesser des Rotors, insbesondere höchstens so gross wie der Radius des Luftspalts.

Das erfindungsgemässe Merkmal, dass der Stator zumindest in seinem Randbereich eine magnetische Höhe aufweist, die kleiner ist als die magnetische Rotorhöhe des Rotors in seinem radial innenliegenden Bereich, lässt sich durch zahlreiche Massnahmen realisieren, von denen im Folgenden einige bevorzugte aufgezählt werden.

Die magnetische Höhe des Stators kann eine Stufe aufweisen, sodass die magnetische Höhe des Stators im Randbereich kleiner ist als in einem zentralen Bereich.

Die magnetische Höhe des Stators kann in dem Randbereich kontinuierlich nach aussen hin abnehmen.

Die magnetische Höhe des Stators kann in dem Randbereich linear nach aussen hin abnehmen, beispielsweise kann der Stator in seinem Randbereich bezüglich der radialen Richtung abgeschrägt ausgestaltet sein.

Die magnetische Höhe des Stators kann im Randbereich gekrümmt abnehmen, sowohl konkav als auch konvex. Insbesondere kann die Krümmung auch sphärisch ausgebildet sein.

Der magnetisch aktive Teil des Stators kann im Randbereich gerundet ausgestaltet ist, sodass die magnetische Höhe nach aussen hin abnimmt. Dazu kann der Randbereich des Stators nach aussen gewölbt ausgestaltet sein wie bei einer Bombierung.

Der magnetisch aktive Teil des Stators kann im Randbereich mindestens eine Umfangsnut aufweisen, die sich in Umfangsrichtung um den gesamten Stator herum erstreckt. Auch hierdurch lässt sich die magnetische Höhe des Stators im Randbereich reduzieren.

Eine besonders einfache Ausgestaltung ist es, wenn die magnetische Höhe des Stators über den Durchmesser des Stators konstant ist.

In analoger Weise ist es natürlich auch möglich alternativ oder ergänzend die magnetische Rotorhöhe des Rotors zumindest in seinem radial innenliegenden Bereich zu verändern. Hierzu sind beispielsweise folgende bevorzugte Massnahmen möglich.

Die magnetische Rotorhöhe des Rotors kann eine Stufe aufweisen, sodass die magnetische Rotorhöhe im innenliegende Bereich grösser ist als in einem aussenliegenden Bereich.

Die magnetische Rotorhöhe kann in dem innenliegenden Bereich nach innen hin zunehmen, wobei geradlinige und gekrümmte Zunahmen möglich sind.

Die magnetische Rotorhöhe kann in dem innenliegenden Bereich kontinuierlich nach innen hin zunehmen.

Auch bezüglich des Rotors ist es eine besonders einfache Ausgestaltung, wenn die magnetische Rotorhöhe über den Durchmesser des Rotors konstant ist.

Bezüglich des Stators sind solche Ausgestaltungen bevorzugt, bei welchen der Stator mehrere insbesondere vier Statorzähne aufweist.

Ein für die Praxis besonders wichtiger Anwendungsfall ist es, wenn der Rotor als permanentmagnetischer Rotor ausgestaltet ist.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Zeichnung zeigen teilweise im Schnitt:
- Fig. 1:: ein schematische Darstellung eines Ausführungsbeispiels eines erfindungsgemässen elektrischen Drehantriebs,
- Fig.2:: eine schematische Darstellung des Ausführungsbeispiels entsprechend einem Schnitt entlang der Schnittlinie II-II in Fig. 1
- Fig. 3 - 6:: wie Fig. 2, jedoch für Varianten des Stators,
- Fig. 7 - 10:: wie Fig. 2, jedoch für Varianten des Rotors, und
- Fig. 11:: ein schematische Darstellung eines zweiten Ausführungsbeispiels eines erfindungsgemässen elektrischen Drehantriebs

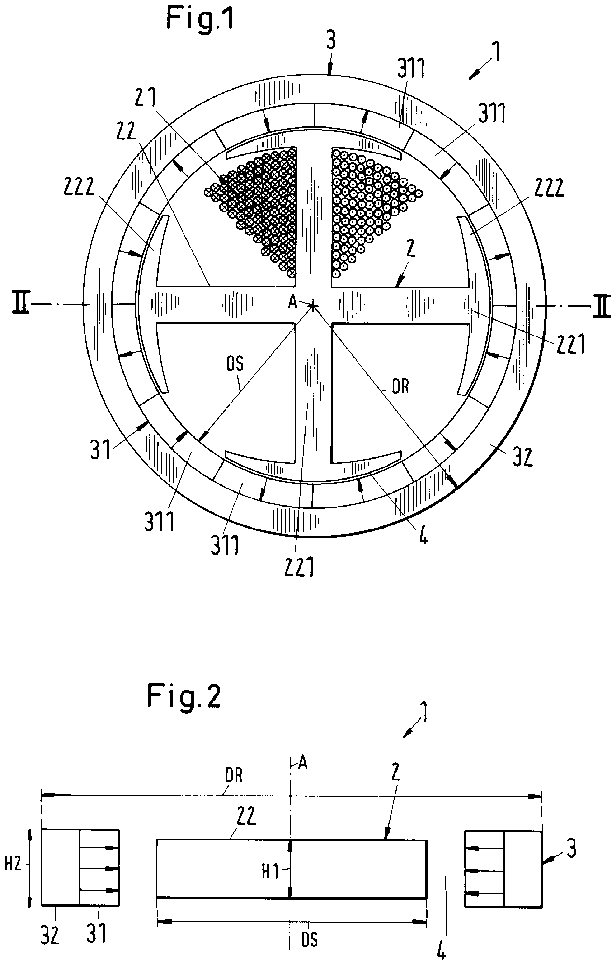

Fig. 1 zeigt in einer schematischen Darstellung ein Ausführungsbeispiel eines erfindungsgemässen elektrischen Drehantriebs, der gesamthaft mit dem Bezugszeichen 1 bezeichnet ist. Fig. 2 zeigt eine schematische Darstellung des Ausführungsbeispiels, die einem Schnitt entlang der Schnittlinie II - II in Fig. 1 entspricht.

Der erfindungsgemässe elektrische Drehantrieb 1 ist als Aussenläufermotor - im Folgenden auch Aussenläufer- ausgestaltet, das heisst mit einem innenliegenden Stator 2 und mit einem Rotor 3, welcher um den Stator 2 herum angeordnet ist. Der Rotor 3 ist ringförmig ausgestaltet und vollkommen magnetisch gelagert. Zwischen dem Rotor 3 und dem Stator 2 ist ein Luftspalt 4 (siehe auch Fig. 2) vorgesehen, der in Fig. 1 kaum zu erkennen ist.

Der elektromagnetische Drehantrieb 1 ist als lagerloser Motor ausgestaltet, wobei der Begriff lagerloser Motor wie eingangs erläutert zu verstehen ist, nämlich, dass keine separaten Magnetlager für den Rotor 3 vorhanden sind. Der Stator 3 ist sowohl Lager- als auch Antriebsstator, mit welchem ein Drehmoment generierbar ist, das die Rotation des Rotors 3 um eine Drehachse A antreibt und mit welchem der Rotor magnetisch lagerbar ist. Dazu hat der Stator eine Wicklung 21 (in Fig. 1 nur teilweise dargestellt), die eine Antriebswicklung der Polpaarzahl p sowie eine Steuerwicklung der Polpaarzahl p±1 umfasst. Bezüglich seiner radialen Position in der zur Drehachse A senkrechten Ebene ist der Rotor 3 aktiv magnetisch gelagert, das heisst die radiale Position des Rotors 3 ist über die Wicklung 21 des Stators aktiv steuerbar bzw. regelbar. Bezüglich dreier weiterer Freiheitsgrade, nämlich seiner axialen Auslenkung in Richtung der Drehachse A und Verkippungen bezüglich der zur Drehachse A senkrechten Ebene (zwei Freiheitsgrade) ist der Rotor passiv magnetisch, das heisst nicht ansteuerbar, durch Reluktanzkräfte stabilisiert. Bezüglich weiterer Details des lagerlosen Motors sei hier auf die EP-A-0 860 046 und die EP-A-0 819 330 verwiesen.

Die Drehachse A des Rotors 3, ist die Soll-Drehachse, um welche der Rotor 3 rotiert, wenn er bezüglich des Stators 2 zentriert ist und nicht verkippt ist. In diesem Falle fallen sowohl die Rotorachse als auch die Statorachse mit der Drehachse A zusammen.

Der Stator 2 weist eine magnetische Höhe H1 auf (siehe Fig. 2) und der Rotor 3 weist eine magnetische Rotorhöhe H2 auf.

Mit der magnetischen Höhe H1 des Stators 2 bzw. mit der magnetischen Rotorhöhe H2 des Rotors ist jeweils die Erstreckung der magnetisch wirksamen Teile des Stators 2 bzw. des Rotors 3 in der durch die Drehachse A festgelegten axialen Richtung gemeint. Mit den magnetisch wirksamen Teilen sind dabei diejenigen Teile des Stators 2 bzw. des Rotors 3 gemeint, deren magnetische Eigenschaften für den Antrieb und die Lagerung des Rotors sorgen. Dies können beispielsweise Permanentmagnete sein oder Eisen oder Eisenbleche oder Teile aus gesintertem weichmagnetischen Pulver. Hingegen bleiben beispielsweise Ummantelungen des Rotors aus Kunststoff, Keramik oder nicht-magnetischen, genauer gesagt nichtferromagnetischen Metallen , insbesondere Stahl, Edelstahl oder sogenannter nicht-magnetischer Stahl, für die magnetische Rotorhöhe H2 unberücksichtigt.

Im Folgenden wird mit beispielhaftem Charakter auf den für die Praxis besonders wichtigen Anwendungsfall Bezug genommen, bei welchem der Rotor 3 als permanentmagnetischer Rotor ausgestaltet ist. Es versteht sich, dass die Erfindung nicht auf permanentmagnetische Rotoren beschränkt ist. Der Rotor 3 kann beispielsweise auch als Reluktanzläufer ausgestaltet sein, in einem Motor, der nach dem Prinzip des Reluktanzmotors arbeitet. Der Rotor 3 kann auch eine kurzgeschlossene Wicklung umfassen oder als Käfigläufer ausgestaltet sein wie in Induktionsmotoren.

Fig. 1 zeigt in schematischer Darstellung eine Aufsicht auf das Ausführungsbeispiel des elektromagnetischen Drehantriebs 1, während in Fig. 2 eine schematische Darstellung des Ausführungsbeispiels gezeigt ist, die einem Schnitt entlang der Schnittlinie II - II in Fig. 1 entspricht. Der Luftspalt 4 ist in Fig. 2 zum besseren Verständnis grösser dargestellt als in Fig. 1

Der ringförmige Rotor 3 umfasst einen permanentmagnetischen Ring 31 sowie einen konzentrisch dazu angeordneten ringförmigen Eisenrückschluss 32, welcher den permanentmagnetischen Ring 31 an seiner Aussenseite umgibt. Der permanentmagnetische Ring 31 umfasst mehrere - hier zwölfpermanentmagnetische Segmente 311, die wechselweise radial nach aussen und radial nach innen magnetisiert sind, so wie dies die Pfeile ohne Bezugszeichen in den Segmenten 311 andeuten. Es versteht sich, dass der Rotor 3 noch weitere Teile, beispielsweise eine Kunststoff- oder Stahlummantelung, umfassen kann, die aber für das Verständnis der Erfindung nicht wesentlich sind. Daher wird hierauf nicht näher eingegangen. Der Aussendurchmesser des ringförmigen Rotors 3 wird als Durchmesser DR des Rotors bezeichnet.

Der innenliegende Stator 2 weist mehrere - hier vier - Statorzähne 22 auf, von denen jeder im wesentlichen T-förmig oder ankerförmig ausgestaltet ist und sich aus dem Zentrum, durch das die Drechachse A verläuft, radial nach aussen erstreckt. Jeder T-förmige Statorzahn 22 umfasst einen Schenkel 221, der in radialer Richtung verläuft, sowie einen segmentförmigen Polschuh 222, der im wesentlichen senkrecht zum Schenkel 221 verläuft und dessen dem Rotor 3 zugewandte Aussenseite kreissegmentförmig ausgestaltet ist. Alle Polschuhe 222 liegen mit ihrer Aussenseite auf dem gleichen Kreis, durch dessen Zentrum die Drehachse A verläuft. Der Durchmesser dieses Kreises ist der Durchmesser DS des Stators. Die Statorzähne 22 sind beispielsweise aus Eisen gefertigt insbesondere aus einem Paket aus Eisenblechen.

Es sind natürlich auch solche Ausgestaltungen des Stators 2 möglich, bei welchen die Statorzähne 22 keine ausgeprägten Polschuhe 222 aufweisen, sondern jeweils das radial aussenliegende Ende der Schenkel 221 einen Pol bilden.

Da in der Praxis der magnetisch wirksame Luftspalt 4 zwischen den Polschuhen 222 und dem Rotor 3 sehr eng ist, unterscheidet sich der halbe Durchmesser DS des Stators 3 meist nur geringfügig oder vernachlässigbar vom Radius des Luftspalts 4.

Die Wicklung 21 des Stators 2 ist auf den Schenkeln 221 des Stators 2 vorgesehen, so wie dies in Fig. 1 für einen Schenkel 221 dargestellt ist.

Da alle weiteren Komponenten des elektrischen Drehantriebs 1, wie beispielsweise die Steuer- und Regeleinrichtungen hinreichend bekannt sind, wird auf diese hier nicht eingegangen.

Erfindungsgemäss weist der Stator 2 zumindest in seinem Randbereich die magnetische Höhe H1 auf, die kleiner ist als die magnetische Rotorhöhe H2 des Rotors 3 in seinem radial innenliegenden Bereich. Dieses Merkmal ist so zu verstehen, dass es die folgenden Möglichkeiten umfasst: die magnetische Höhe des Stators 2 ist in seinem Randbereich konstant oder die magnetische Höhe des Stators 2 nimmt in seinem Randbereich stetig oder kontinuierlich ab, oder die magnetische Höhe des Stators 2 weißt in seinem Randbereich mindestens einen Sprung auf, oder die magnetische Höhe des Stators ist in seinem Randbereich bereichsweise konstant, beispielsweise kann die magnetische Höhe in dem Randbereich bezüglich der radialen Richtung nach aussen hin zunächst -linear oder gekrümmt abnehmen und dann konstant bleiben. Sinngemäss das gleiche gilt für die magnetische Rotorhöhe im radial innenliegenden Bereich des Rotors 3, die dort konstant sein kann oder radial nach innen hin zunehmend oder Kombinationen davon.

Fig. 2 zeigt eine besonders einfache und daher auch bevorzugte Ausgestaltung. Die magnetische Höhe H1 des Stators 2 ist über den Durchmesser DS des Stators 2 konstant und die magnetische Rotorhöhe H2 ist über den Rotor 3 konstant, wobei H2 grösser ist als H1.

Durch diese Massnahme sind bei Verkippungen des Rotors 3 die magnetischen Feldlinien zwischen Rotor 3 und Stator 2 länger als bei gleicher Höhe H1 des Stators und H2 des Rotors. Längere Feldlinien bedeuten aber einen energetisch höheren Zustand, sodass für H2 > H1 der verkippte Zustand energetisch höher ist als für H1 = H2. Dies bedeutet aber, dass der unverkippte Zustand im Vergleich zum verkippten Zustand deutlich attraktiver ist, wenn H2 > H1. Hieraus resultiert eine bessere Stabilisierung des unverkippten Zustands, wenn H2 > H1 ist.

Dabei ist es nicht notwendig, dass die Beziehung H2 > H1 für den gesamten Stator 2 bzw. für den gesamten Rotor 3 gültig ist. Vielmehr hat sich gezeigt, dass die Bedingung H2 > H1 nur in den sich gegenüberliegenden Randbereichen von Rotor 3 und Stator 2 gelten muss. Das bedeutet, dass sich der magnetisch wirksame Luftspalt 4 zwischen dem Stator 2 und dem Rotor 3 gegen die axialen Ränder hin oder im Bereich der axialen Ränder aufweitet. Mit dem axialen Rand sind dabei die jeweils beiden Enden des Rotors 3 bzw. des Stators 2 in axialer Richtung gemeint, also darstellungsgemäss (Fig. 2 oder Fig. 3-10) die oberen bzw. unteren Enden. Fig. 2 stellt dann den Grenzfall dar, dass im axialen Randbereich der Luftspalt 4 auch den gesamten Innenraum des Rotors 3 umfassen kann.

Es gibt zahlreiche Möglichkeiten, wie sich das Merkmal realisieren lässt, dass die magnetische Höhe H1 des Stators 2 zumindest in seinem Randbereich kleiner ist als die magnetische Rotorhöhe H2 im radial innenliegenden Bereich des Rotors 3.

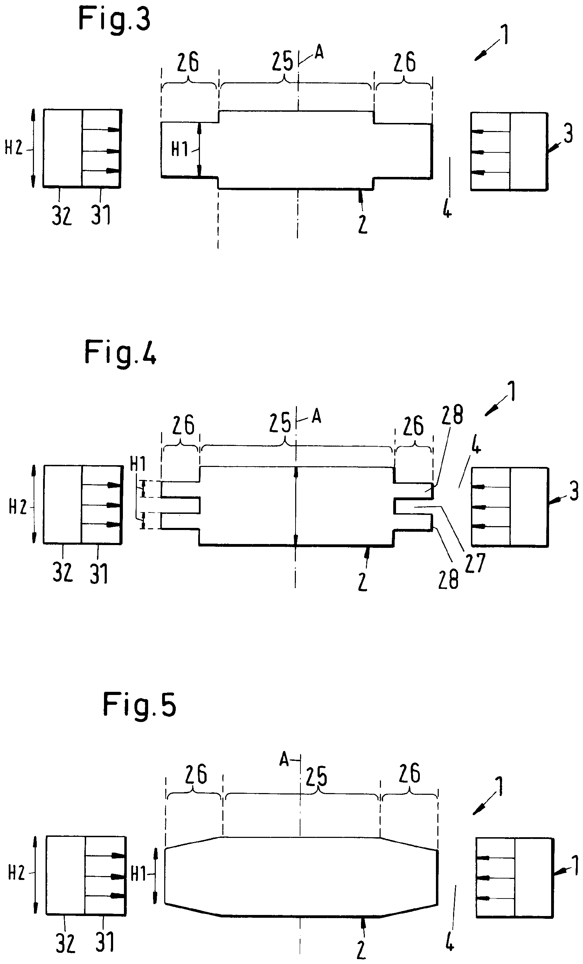

Im Folgenden werden anhand der Fig. 3 - 10 einige bevorzugte Varianten erläutert, wie der Stator 2 bzw. der Rotor 3 ausgestaltet sein können. Die Darstellungen in den Fig. 3 - 10 entsprechen der Darstellung in Fig. 2. Gleiche oder von der Funktion her gleichwertige Teile sind in den Fig. 3 - 10 jeweils mit den gleichen Bezugszeichen bezeichnet.

Fig. 3 zeigt eine Variante, bei welcher die magnetische Höhe des Stators 2 eine Stufe aufweist, welche einen zentralen Bereich 25 von einem Randbereich 26 trennt. Der zentrale Bereich 25 ist der bezüglich der radialen Richtung innenliegende Bereich, an welchen sich aussen der Randbereich 26 anschliesst. Im zentralen Bereich 25 weist der Stator 2 eine grössere magnetische Höhe auf als im Randbereich 26. Im zentralen Bereich 25 ist die magnetische Höhe des Stators 2 gleich gross wie die magnetische Rotorhöhe H2, während im Randbereich 26 des Stators 2 seine magnetische Höhe H1 kleiner ist als die magnetische Rotorhöhe H2. Natürlich kann die magnetische Höhe im zentralen Bereich des Stators auch verschieden sein von der magnetischen Rotorhöhe H2.

Fig. 4 zeigt eine Variante ähnlich zu der Variante in Fig. 3, jedoch ist zusätzlich im Randbereich 26 des magnetisch aktiven Teils des Stators 2 noch eine Umfangsnut 27 vorgesehen, welche sich in Umfangsrichtung gesehen um den gesamten Stator 2 herum erstreckt. Es versteht sich, dass natürlich auch mehr als eine Umfangsnut 27 vorgesehen sein kann. Durch diese Umfangsnut 27 werden zwei Stege 28 ausgebildet. Die magnetische Höhe H1 des Stators im Randbereich 26 ergibt sich dann als die Summe der Höhe der Stege 28 in axialer Richtung.

Eine Umfangsnut 27 oder mehrere Umfangsnuten können natürlich auch bei der Variante gemäss Fig. 2 vorgesehen sein.

Fig. 5 zeigt eine Variante des Stators 2, bei welcher die magnetische Höhe im Randbereich 26 des Stators kontinuierlich in radialer Richtung nach aussen hin abnimmt, bis sie am radial äusseren Rand den Wert H1 annimmt. Im zentralen Bereich 25 kann der Stator 2 konstant die gleiche magnetische Höhe aufweisen wie die magnetische Rotorhöhe H2. Die kontinuierliche Abnahme der magnetischen Höhe im Randbereich 26 des Stators 2 ist bei dieser Variante linear, das heisst im Randbereich 26 ist der Stator 2 bezüglich der radialen Richtung abgeschrägt ausgestaltet. Es ist natürlich auch möglich, dass die kontinuierliche Abnahme der magnetischen Höhe im Randbereich 26 nicht linear ist, sondern gekrümmt. Dazu sind sowohl konkave als auch konvexe Krümmungen möglich.

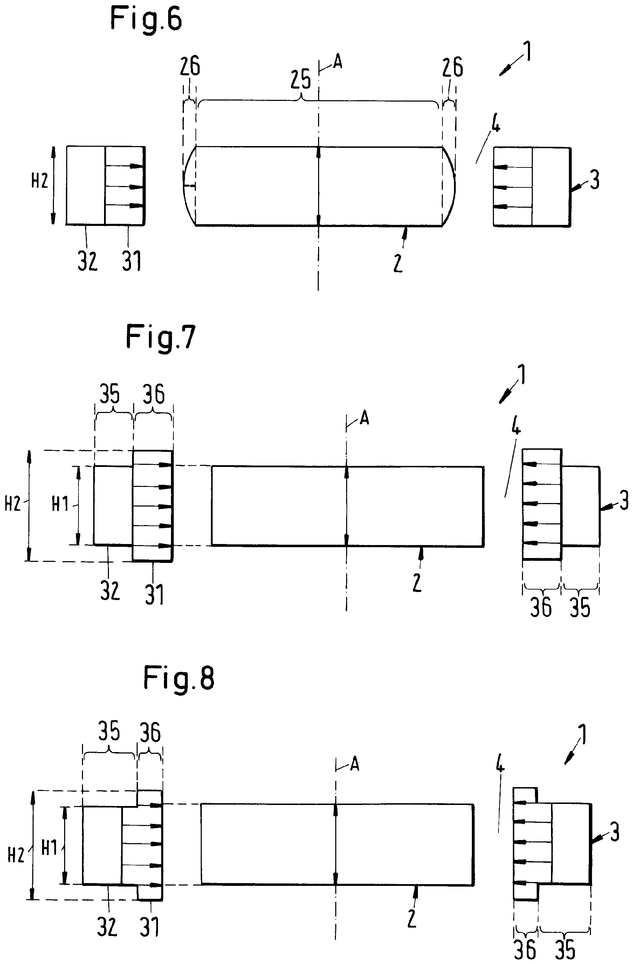

Einen Spezialfall einer kontinuierlichen, gekrümmten Abnahme der magnetischen Höhe des Stators 2 in seinem Randbereich 26 zeigt die Variante in Fig. 6. Bei dieser Variante ist der magnetisch aktive Teil des Stators 2 in seinem Randbereich 26 gerundet in Form einer Bombierung ausgestaltet. Die Rundung ist vorzugsweise sphärisch. Hier nimmt die magnetische Höhe des Stators 2 im Randbereich 26 in radialer Richtung gesehen kontinuierlich ab, bis sie schliesslich am bezüglich der radialen Richtung äussersten Punkt - zumindest theoretisch - den Wert Null erreicht.

Es versteht sich, dass die in den Fig. 2-6 gezeigten Varianten natürlich auch miteinander kombiniert werden können.

In den Fig. 7-10 sind Varianten dargestellt, die sich auf Modifikationen am Rotor 3 beziehen. In den Fig. 7-10 hat der Stator 2 jeweils eine über seinen gesamten Durchmesser DS konstante magnetisch Höhe H1. Das muss nicht so sein. Natürlich können die in den Fig. 7 - 10 gezeigten Varianten auch mit denen, die für den Stator 2 in den Fig. 2-6 gezeigt sind, kombiniert werden.

Fig. 7 zeigt eine Variante, bei welcher die magnetische Rotorhöhe des Rotors 3 eine Stufe aufweist. Der Rotor hat einen bezüglich der radialen Richtung innenliegenden Bereich 36, der hier den gesamten permanentmagnetischen Ring 31 umfasst, und einen bezüglich der axialen Richtung aussenliegenden Bereich 35, der hier den gesamten Eisenrückschluss 32 umfasst. Die magnetische Höhe des aussenliegenden Bereichs 35 ist bezüglich der radialen Richtung konstant und gleich der magnetischen Höhe H1 des Stators 2, während der innenliegende Bereich 36 eine in radialer Richtung konstante magnetische Rotorhöhe H2 aufweist, die grösser als H1 ist, sodass zwischen dem innenliegenden Bereich 36 und dem aussenliegenden Bereich 35 eine Stufe in der magnetischen Rotorhöhe auftritt.

Fig. 8 zeigt eine Variante wie Fig. 7, jedoch ist nun die Stufe im Bereich des permanentmagnetischen Rings 31 vorgesehen. Natürlich kann die Stufe auch im Bereich des Eisenrückschlusses 32 vorgesehen sein.

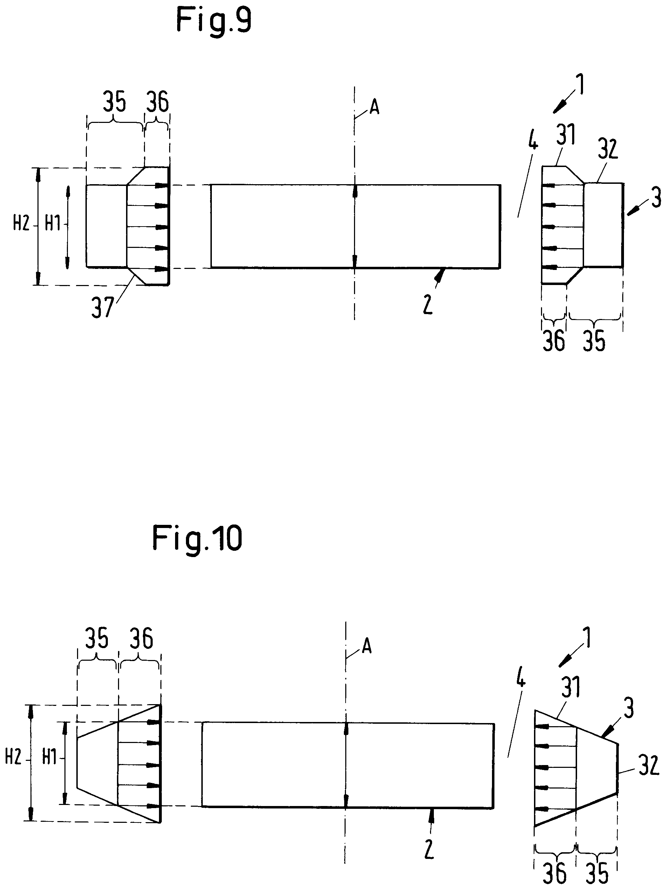

Fig. 9 zeigt eine Variante, bei welcher die Stufe in der magnetischen Rotorhöhe durch eine Schräge 37 ersetzt ist.

Fig. 10 zeigt eine Variante, bei welcher die magnetische Rotorhöhe in dem innenliegenden Bereich 36 nach innen hin zunimmt, bis sie an der radial innenliegenden Begrenzungsfläche den Wert H2 annimmt, der grösser ist als die magnetische Höhe H1 des Stators 2. Im speziellen nimmt die magnetische Rotorhöhe in dem innenliegenden Bereich 36 kontinuierlich, hier linear, nach innen zu. Es sind natürlich auch Ausgestaltungen möglich, bei welchen die kontinuierliche Zunahme der magnetischen Rotorhöhe einer krummlinigen Funktion folgt, die konkav oder konvex sein kann.

Es sind noch zahlreiche Varianten möglich, um einen erfindungsgemässen Drehantrieb 1 zu realisieren. Wesentlich ist, dass der Stator 2 zumindest in seinem bezüglich der radialen Richtung äusseren Randbereich 26 eine magnetische Höhe aufweist, die kleiner ist als die magnetische Rotorhöhe des Rotors 3 in seinem radial innenliegenden Bereich 36, wobei mit "kleiner" auch gemeint ist, dass die magnetische Höhe im Randbereich des Stators 2 nach aussen hin abnehmen kann, z. B. kontinuierlich abnimmt, oder dass die magnetische Rotorhöhe im innenliegenden Bereich 36 des Rotors 3 nach innen hin zunimmt, z.B. kontinuierlich zunimmt. Insbesondere kann die magnetische Höhe des Stators 2 in seinem Randbereich 26 auch bis auf Null abnehmen (siehe z. B. Fig. 6).

Durch diese Massnahme weitet sich der magnetisch wirksame Luftspalt 4 zwischen dem Rotor 3 und dem Stator 2 gegen die Ränder, welche den Rotor 3 bzw. den Stator 2 in axialer Richtung begrenzen, auf. Im Fall der Fig. 2 nimmt der Luftspalt 4 an den axialen Rändern des Stators 2 den gesammten Innenraum 2 des Rotors 3 ein.

Durch diese Massnahmen werden die magnetischen Feldlinien zwischen dem Rotor 3 und dem Stator 2 im verkippten Zustand verlängert, wenn man sie mit den Feldlinien des verkippten Zustand bei einem Aussenläufer mit gleicher konstanter magnetischer Höhe des Stators und magnetischer Rotorhöhe vergleicht. Diese Verlängerung der Feldlinien entspricht einem energetisch höheren Zustand, wodurch der unverkippte Zustand stabilisiert wird.

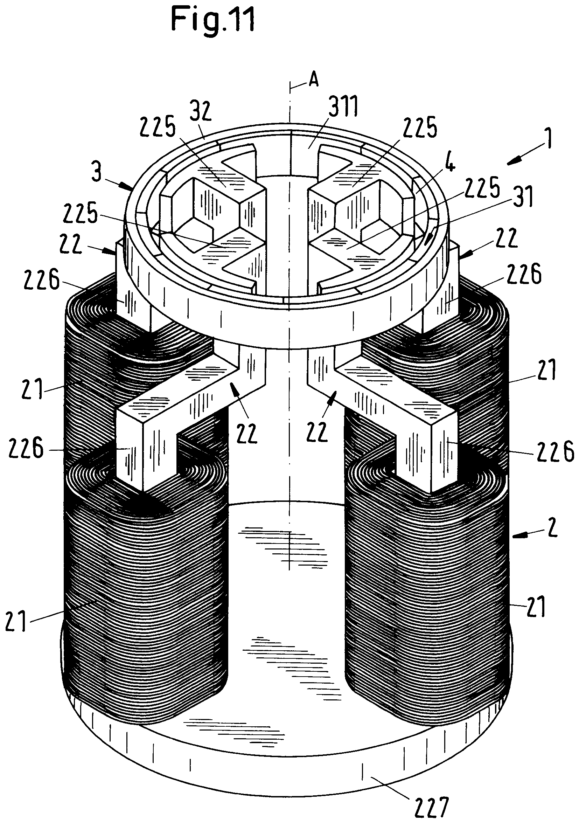

Fig. 11 zeigt in einer perspektivischen schematische Darstellung ein zweites Ausführungsbeispiel eines erfindungsgemässen elektrischen Drehantriebs 1. Von deer Funktion her gleiche oder gleichwertige Teile sind mit den gleichen Bezugszeichen bezeichnet wie bei dem vorangehend beschriebenen Ausführungsbeispiel.

Der in Fig. 11 dargestellte Aussenläufermotor ist nach dem Prinzip des Tempelmotors aufgebaut. Der Tempelmotor wird beispielsweise in der bereits zitierten EP-A-0 860 046 offenbart (siehe dort Fig. 8k und zugehörige Textpassagen), allerdings in der Ausführungsform als Innenläufer. Bei dem Tempelmotor ist der Stator 2 so ausgestaltet, dass jeder Statorzahn 22 jeweils einen sich in radialer Richtung erstreckenden ersten Schenkel 225 umfasst und einen sich in axialer Richtung erstreckenden zweiten Schenkel 226, wobei die Wicklung 21 jeweils auf den sich in axialer Richtung ertreckenden zweiten Schenkeln 226 angeordnet ist. Die Wicklung 21 des Stators 2 ist also nicht wie bei dem in Fig. 1 dargestellten Ausführungsbeispiel in der gleichen Ebene angeordnet wie der Rotor 3, sondern darstellungsgemäss (Fig. 11) unterhalb des Rotors 3. Natürlich kann die Wicklung 21 auch oberhalb des Rotors 3 vorgesehen sein.

Im einfachsten Fall, wie dies in Fig. 8k der EP-A-0 860 046 für den Innenläufer dargestellt ist, sind die Statorzähne jeweils L-förmig ausgestaltet, wobei sich der kürzere Schenkel des L in radialer Richtung erstreckt und der längere mit der Wicklung versehene Schenkel in der axialen Richtung.

Bei dem in Fig. 11 dargestellten zweiten Ausführungsbeispiel eines Aussenläufers ist jeder Statorzahn 22 dreifach geknickt ausgestaltet, hauptsächlich aus Platzgründen. Von dem jeweiligen Polschuh 222 erstreckt sich zunächst der erste Schenkel 225 radial nach innen auf die Drehachse A zu, dann erstreckt sich der Statorzahn 22 in axialer Richtung darstellungsgemäss nach unten, anschliessend in radialer Richtung nach aussen und dann schliesst sich der zweite Schenkel 226 an, der sich in axialer Richtung darstellungsgemäss nach unten erstreckt. Alle Statorzähne 22 enden auf einem plattenförmigen Rückschluss 227, welches den magnetischen Rückschluss der Statorzähne 22 realisiert. Von seiner Funktionsweise ist der Tempelmotor identisch wie das in Fig. 1 dargestellte Ausführungsbeispiel.

Bezüglich der magnetischen Höhe des Stators 2 und der magnetischen Bauhöhe der Rotors 1 gelten für das zweite Ausführungsbeispiel sämtliche Aussagen und Erklärungen wie sie für das in Fig. 1 dargestellte Ausführungsbeispiel gemacht wurden in sinngemäss gleicher Weise. Insbesondere sind alle in den Fig. 2-10 dargestellten Varianten auch für das zweite Ausführungsbeispiel (Fig. 11) möglich.

Bei dem erfindungsgemässen Aussenläufermotor lassen sich für einen vorgegebenen Radius des Luftspalts 4 zwischen dem Rotor 3 und dem Stator 2 auch deutlich grössere magnetische Rotorhöhen H2 des Rotors 3 passiv magnetisch gegen Verkippungen stabilisieren wie bei bekannten lagerlosen Aussenläufermotoren mit dem gleichen Radius des Luftspalts. Auch ist das maximal erreichbare verkippungsstabilisierende Moment bei dem erfindungsgemässen Drehantrieb deutlich höher.

Vorzugsweise ist die magnetische Rotorhöhe H2 oder die minimale magnetische Rotorhöhe höchstens so gross wie der halbe Aussendurchmesser des Rotors 3, insbesondere höchstens so gross wie der Radius des Luftspalts 4 zwischen Stator 2 und Rotor 3.

## Patentansprüche

1. Elektrischer Drehantrieb, ausgestaltet als lagerloser Aussenläufermotor, mit einem magnetisch gelagerten, im wesentlichen ringförmigen Rotor (3), der um einen innenliegenden Stator (2) herum angeordnet ist, wobei zwischen dem Rotor (3) und dem Stator (2) ein Luftspalt (4) vorgesehen ist, wobei der Stator (2) als Lager- und Antriebsstator ausgestaltet ist, mit welchem die Rotation des Rotors (3) um eine Drehachse (A) antreibbar ist und mit welchem der Rotor (3) magnetisch lagerbar ist, wobei der Rotor (3) radial in der zur Drehachse (A) senkrechten Ebene aktiv magnetisch gelagert ist und axial in Richtung der Drehachse (A) sowie gegen Verkippungen passiv magnetisch gelagert ist, **dadurch gekennzeichnet, dass** der Stator (2) zumindest in seinem Randbereich (26) eine magnetische Höhe (H1) aufweist, die kleiner ist als die magnetische Rotorhöhe (H2) des Rotors (3) in seinem radial innenliegenden Bereich (36).

2. Elektrischer Drehantrieb nach Anspruch 1, bei welchem die minimale magnetische Rotorhöhe (H2) höchstens so gross ist wie der halbe Aussendurchmesser (DR) des Rotors (3), insbesondere höchstens so gross wie der Radius des Luftspalts (4).

3. Elektrischer Drehantrieb nach Anspruch 1 oder 2, bei welchem die magnetische Höhe (H1) des Stators (2) eine Stufe aufweist, sodass die magnetische Höhe (H1) des Stators (2) im Randbereich (26) kleiner ist als in einem zentralen Bereich (25).

4. Elektrischer Drehantrieb nach einem der vorangehenden Ansprüche, bei welchem die magnetische Höhe (H1) des Stators (2) in dem Randbereich (26) kontinuierlich nach aussen hin abnimmt.

5. Elektrischer Drehantrieb nach einem der vorangehenden Ansprüche, bei welchem die magnetische Höhe (H1) des Stators (2) in dem Randbereich (26) linear nach aussen hin abnimmt.

6. Elektrischer Drehantrieb nach einem der vorangehenden Ansprüche, bei welchem die magnetische Höhe (H1) des Stators (2) im Randbereich (26) gekrümmt abnimmt.

7. Elektrischer Drehantrieb nach Anspruch 6, bei welchem der magnetisch aktive Teil des Stators (2) im Randbereich (26) gerundet ausgestaltet ist, sodass die magnetische Höhe (H1) nach aussen hin abnimmt.

8. Elektrischer Drehantrieb nach einem der vorangehenden Ansprüche, bei welchem der magnetische aktive Teil des Stators (2) im Randbereich (26) mindestens eine Umfangsnut (27) aufweist, die sich in Umfangsrichtung um den gesamten Stator (2) herum erstreckt.

9. Elektrischer Drehantrieb nach Anspruch 1 oder 2, bei welchem die magnetische Höhe (H1) des Stators (2) über den Durchmesser (DS) des Stators (2) konstant ist.

10. Elektrischer Drehantrieb nach einem der vorangehenden Ansprüche, bei welchem die magnetische Rotorhöhe (H2) des Rotors (3) eine Stufe aufweist, sodass die magnetische Rotorhöhe (H2) im innenliegende Bereich (36) grösser ist als in einem aussenliegenden Bereich (35).

11. Elektrischer Drehantrieb nach einem der vorangehenden Ansprüche, bei welchem die magnetische Rotorhöhe (H2) in dem innenliegenden Bereich (36) nach innen hin zunimmt.

12. Elektrischer Drehantrieb nach einem der vorangehenden Ansprüche, bei welchem die magnetische Rotorhöhe (H2) in dem innenliegenden Bereich (36) kontinuierlich nach innen hin zunimmt.

13. Elektrischer Drehantrieb nach einem der Ansprüche 1 bis 9, bei welchem die magnetische Rotorhöhe (H2) über den Durchmesser (DR) des Rotors (3) konstant ist.

14. Elektrischer Drehantrieb nach einem der vorangehenden Ansprüche, bei welchem der Stator (2) mehrere insbesondere vier Statorzähne (22) aufweist.

15. Elektrischer Drehantrieb nach einem der vorangehenden Ansprüche, bei welchem der Rotor (3) als permanentmagnetischer Rotor (3) ausgestaltet ist.

## Claims

1. An electric rotary drive, designed as a bearingless external rotor motor, having a magnetically supported, substantially ring-shaped rotor (3) which is arranged around an inwardly disposed stator (2), wherein an air gap (4) is provided between the rotor (3) and the stator (2), wherein the stator (2) is designed as a bearing and drive stator with which the rotation of the rotor (3) can be driven about an axis of rotation (A) and with which the rotor (3) can be magnetically supported, wherein the rotor (3) is radially supported in an actively magnetic manner in the plane perpendicular to the axis of rotation (A) and is supported axially in the direction of the axis of rotation (A) and against tilting in a passively magnetic manner, **characterized in that** the stator (2) has, at least in its marginal region (26), a magnetic height (H1) which is smaller than the magnetic rotor height (H2) of the rotor (3) in its radially inwardly disposed region (36).

2. An electric rotary drive in accordance with claim 1, wherein the minimal magnetic rotor height (H2) is at most as large as half the external diameter (DR) of the rotor (3), in particular at most as large as the radius of the air gap (4).

3. An electric rotary drive in accordance with claim 1 or claim 2, wherein the magnetic height (H1) of the stator (2) has a step so that the magnetic height (H1) of the stator (2) is smaller in the marginal region (26) than in a central region (25).

4. An electric rotary drive in accordance with any one of the preceding claims, wherein the magnetic height (H1) of the stator (2) reduces continuously outwardly in the marginal region (26).

5. An electric rotary drive in accordance with any one of the preceding claims, wherein the magnetic height (H1) of the stator (2) reduces linearly outwardly in the marginal region (26).

6. An electric rotary drive in accordance with any one of the preceding claims, wherein the magnetic height (H1) of the stator (2) reduces in a curved manner in the marginal region (26).

7. An electric rotary drive in accordance with claim 6, wherein the magnetic active part of the stator (2) is designed rounded in the marginal region (26) so that the magnetic height (H1) reduces outwardly.

8. An electric rotary drive in accordance with any one of the preceding claims, wherein the magnetic active part of the stator (2) has at least one peripheral groove (27) in the marginal region (26), which extends around the whole stator (2) in the peripheral direction.

9. An electric rotary drive in accordance with claim 1 or claim 2, wherein the magnetic height (H1) of the stator (2) is constant over the diameter (DS) of the stator (2).

10. An electric rotary drive in accordance with any one of the preceding claims, wherein the magnetic rotor height (H2) of the rotor (3) has a step so that the magnetic rotor height (H2) is larger in the inwardly disposed region (36) than in an outwardly disposed region (35).

11. An electric rotary drive in accordance with any one of the preceding claims, wherein the magnetic rotor height (H2) increases inwardly in the inwardly disposed region (36).

12. An electric rotary drive in accordance with any one of the preceding claims, wherein the magnetic rotor height (H2) increases continuously inwardly in the inwardly disposed region (36).

13. An electric rotary drive in accordance with any one of the claims 1 to 9, wherein the magnetic rotor height (H2) is constant over the diameter (DR) of the rotor (3).

14. An electric rotary drive in accordance with any one of the preceding claims, wherein the stator (2) has a plurality of stator teeth (22), in particular four.

15. An electric rotary drive in accordance with any one of the preceding claims, wherein the rotor (3) is designed as a permanent magnetic rotor (3).

## Revendications

1. Un entraînement électrique rotatif, conçu comme un moteur à rotor extérieur sans palier, avec un rotor (3) sensiblement annulaire, supporté magnétiquement, qui est disposé autour d'un stator interne (2), dans lequel une fente d'air (4) est prévue entre le rotor (3) et le stator (2), dans lequel le stator (2) est conçu comme un stator de palier et un stator d'entraînement avec lequel la rotation du rotor (3) peut être entraînée autour d'un axe de rotation (A) et avec lequel le rotor (3) peut être supporté magnétiquement, dans lequel le rotor (3) est activement supporté magnétiquement radialement dans le plan perpendiculaire à l'axe de rotation (A) et est passivement supporté magnétiquement axialement dans la direction de l'axe de rotation (A) et contre des inclinaisons, **caractérisé en ce que** le stator (2) présente, au moins dans sa région de bord (26), une hauteur magnétique (H1) qui est plus petite que la hauteur magnétique de rotor (H2) du rotor (3) dans sa région radialement interne (36).

2. Un entraînement électrique rotatif selon la revendication 1, dans lequel la hauteur minimale magnétique (H2) du rotor est au plus égale à la moitié du diamètre extérieur (DR) du rotor (3), en particulier au plus égale au rayon de la fente d'air (4).

3. Un entraînement électrique rotatif selon la revendication 1 ou 2, dans lequel la hauteur magnétique (H1) du stator (2) présente une étape de sorte que la hauteur magnétique (H1) du stator (2) est plus petite dans la zone de bord (26) que dans une zone centrale (25).

4. Un entraînement électrique rotatif selon l'une des revendications précédentes, dans lequel la hauteur magnétique (H1) du stator (2) diminue continuellement vers l'extérieur dans la zone de bord (26).

5. Un entraînement électrique rotatif selon l'une des revendications précédentes, dans lequel la hauteur magnétique (H1) du stator (2) diminue linéairement vers l'extérieur dans la zone de bord (26).

6. Un entraînement électrique rotatif selon l'une des revendications précédentes, dans lequel la hauteur magnétique (H1) du stator (2) diminue de manière courbe dans la zone de bord (26).

7. Un entraînement électrique rotatif selon la revendication 6, dans lequel la partie magnétiquement active du stator (2) est arrondie dans la zone de bord (26) de sorte que la hauteur magnétique (H1) diminue vers l'extérieur.

8. Un entraînement électrique rotatif selon l'une des revendications précédentes, dans lequel la partie magnétiquement active du stator (2) dans la zone de bord (26) présente au moins une rainure périphérique (27) qui s'étend dans la direction périphérique autour de tout le stator (2).

9. Un entraînement électrique rotatif selon la revendication 1 ou 2, dans lequel la hauteur magnétique (H1) du stator (2) est constante sur le diamètre (DS) du stator (2).

10. Un entraînement électrique rotatif selon l'une des revendications précédentes, dans lequel la hauteur magnétique (H2) du rotor du rotor (3) présente une étape de sorte que la hauteur magnétique (H2) du rotor dans la zone intérieure (36) est plus grande que dans une zone extérieure (35).

11. Un entraînement électrique rotatif selon l'une des revendications précédentes, dans lequel la hauteur magnétique (H2) du rotor augmente vers l'intérieur dans la zone intérieure (36).

12. Un entraînement électrique rotatif selon l'une des revendications précédentes, dans lequel la hauteur magnétique (H2) du rotor augmente continuellement vers l'intérieur dans la zone intérieure (36).

13. Un entraînement électrique rotatif selon l'une des revendications 1 à 9, dans lequel la hauteur magnétique (H2) du rotor est constante sur le diamètre (DR) du rotor (3).

14. Un entraînement électrique rotatif selon l'une des revendications précédentes, dans lequel le stator (2) présente une pluralité, en particulier quatre dents de stator (22).

15. Un entraînement électrique rotatif selon l'une des revendications précédentes, dans lequel le rotor (3) est conçu comme un rotor à aimant permanent (3).
